# EUROPEAN PATENT SPECIFICATION

(11) **EP 3 450 037 B1**
(45) Date of publication and mention of the grant of the patent: **07.02.2024**
(21) Application number: 17189043.7
(22) Date of filing: 01.09.2017
(51) Int. Cl.: B08B 15/04, B08B 17/04, B29C 64/00

(54) **CONTAMINATION PREVENTION DEVICE FOR AN ADDITIVE MANUFACTURING SYSTEM AND CORRESPONDING ADDITIVE MANUFACTURING METHOD**
KONTAMINATIONSVERHINDERUNGSVORRICHTUNG FÜR EIN SYSTEM ZUR GENERATIVEN FERTIGUNG UND ZUGEHÖRIGES VERFAHREN ZUR GENERATIVEN FERTIGUNG
DISPOSITIF DE PRÉVENTION DE LA CONTAMINATION POUR UN SYSTÈME DE FABRICATION ADDITIVE ET PROCÉDÉ DE FABRICATION ADDITIVE CORRESPONDANT

(43) Date of publication of application: 06.03.2019
(73) Proprietor: Auregen BioTherapeutics SA, 1202 Genève (CH)
(72) Inventor: KESTI, Matti Jaakko Johannes, 8057 Zürich (CH); DUSSEUX, Eric Michel, 69300 Caluire-et-Cuire (FR); DEVLIN, James Alastair, Buckinghamshire, HP10 8AG (GB)
(74) Representative: Weickmann & Weickmann PartmbB

(56) References cited:
- AT-B- 358 902
- DE-A1- 4 342 022
- FR-A1- 2 795 351
- US-A1- 2012 288 339
- US-A1- 2015 217 514
- US-A1- 2016 361 873

## Description

### Technical field

The present invention relates to the field of additive manufacturing. More specifically, it relates to a contamination prevention device for additive manufacturing processes, in particular for the additive manufacturing of biological tissues or bodily members.

### Prior art

Additive manufacturing, which includes in particular so called 3D printing techniques, has become a fast-moving field of technology over the last decade. Long reserved for prototyping-only purposes, it has now developed to apply to almost all industries, from consumer goods and automotive to micro and nanotechnologies, medical devices and biotechnologies. In some of these industries it is even already used in commercial manufacturing, in particular for tailor-made or small to medium scale productions.

Additive manufacturing processes generally consists in growing an object by successively depositing layers of one or several materials with a deposition system, so called 3D-printer in general. The deposition system comprises essentially a deposition head movable in at least two, preferably three directions of space, an object holder, which may also be movable along two or three directions of space, and a control unit. The control unit is arranged and programmable to drive the deposition head and/or the object holder along at three orthogonal directions of space according to a 3-dimensional digital model of the object to grow, said model being loaded in a memory of the control unit.

In most additive manufacturing processes the material(s) are deposited by the depositing head in a substantially melted, fluidic state, under a substantial pressure, and harden in the atmosphere after deposition or following a specific thermal co-treatment for example. For the object grown to mimic as best as possible the digital model loaded in the system accurate movement control and precision is required for the deposition head, as well as homogeneity and precision of deposition on the holder or any recipient thereon to receive the object. To achieve the required precision of deposition the fluidic material(s) is often deposited through a nozzle or needle having a sub-millimetre lumen and aperture diameter. This very small dimension at the nozzle or needle outlet, combined with the great pressure required for pushing the fluid material through the latter may, depending on said material nature and viscosity, cause formation of aerosol droplets at the nozzle or needle outlet during deposition. These aerosol droplets are then projected in the deposition environment, and settle on each surface they encounter in that environment.

Such aerosol formation therefore causes dirt and contamination in the deposition system, which in most cases may not be detrimental to the quality of the object grown by deposition but only require regular, but cumbersome, cleaning of the full deposition system.

In some applications however, and in additive manufacturing of biocompatible objects or prosthesis, or of fully biological samples and later organs (3D bio-printing processes), contamination arising from aerosol formation during deposition is critical as it create a major risk of cross-contamination between objects grown from different biological materials, including different cells, DNAs, in a same deposition system.

Currently, the only available solution for preventing such cross-contamination risk in 3D bio-printing processes is to carry out a complete UV disinfection and sanitization of the entire deposition system between each sample formation. However, such complete disinfection is extremely time and resources consuming and further not even effective enough to reduce the cross-contamination risk at an acceptable level, i.e. medical grade, due to the highly intricate and complex mechanical and electronical constructions of the deposition systems.

In fact, ensuring full medical grade compliance would require complete disassembly, cleaning and sterilization of the deposition systems between two printing runs, which is of course not realistic for industrial production purposes, even for prototyping purposes in fact.

The risk of cross-contamination between successive deposition runs currently strongly limits commercial applications of additive manufacturing processes for producing biological and biocompatible products. Meanwhile development and implementation of those additive manufacturing processes for biological and biocompatible products are strongly investigated and demanded from academicals and industrial research alike as those could help significantly reducing development times of such products, in particular for skin or cartilaginous samples.

Sterile environments for additive manufacturing have been proposed in for example US 2015/0217514 and US 2016/361873. These sterile environments comprise a flexible pleated sterile wall solidary fastened as a bottom end to a printing plate and at a top end to a sterile top closure including flap valves adapted for connection to specific printing heads of complementary shape and size. Such sterile environments however are not adaptable to all available additive manufacturing machines.
FR 2795351 A1 generally relates to devices for recovering waste or fumes generated by the execution of work into a receptacle. Particularly, this document relates to a device for recovering drilling dust.
US 2012/0288339 A1 relates to a device making it possible to automatically collect the refuse generated at the time of drilling operations and is characterized in that it includes a receptacle made up of a deformable material comprising adhesive means laid on at least one of its external faces, wherein the adhesive means allow to fix it on the support to be bored.

It is accordingly an aim of the invention to provide a solution to prevent contamination in additive manufacturing processes to reduce the risks issuing from such contamination in the quality of the products manufactured.

It is further a goal of the invention to provide a solution for preventing contamination in additive manufacturing processes which is compatible with additive manufacturing constraints of biological and biocompatible products, in particular with respect to cross-contamination between manufacturing runs.

Another goal of the invention is to provide such a solution against contamination in additive manufacturing processes which is simple and cost efficient to manufacture and to use.

### Disclosure of the invention

The various goals set forth above are achieved, according to a first object of the invention, by the provision of a contamination prevention device as defined in claim 1, comprising a skirt defining a tubular flexible wall having a first and a second ends, said wall (3) being continuous and configured to be extensible in at least two orthogonal dimensions of space, each of said ends at least delimiting an opening and each of said ends being fitted with an elastic ring seal.

The contamination prevention device of the invention is of extremely simple, yet convenient and efficient structure.

The device of the invention advantageously comprises an adjustable, flexible skirt, which can be hermetically adjusted at its upper end, equipped with a first seal, about a deposition head, preferably about the deposition nozzle or needle of said head, of an additive manufacturing system and at the same time be hermetically fitted and adjusted about a sample holder or recipient where an object is manufactured through the deposition head. Thereby, the skirt of the contamination prevention device of the invention provides a sterile field for the manufacturing of the object in the holder, delimiting a substantially hermetic volume from the deposition head to the sample holder.

The skirt is advantageously configured to allow full freedom of movement of the deposition head during manufacturing, while at the same time preventing projection of aerosol droplets from the deposition nozzle or needle outside the volume confined by the skirt's wall. Contamination outside the skirt's wall and the seals at both ends thereof in the additive manufacturing system is hereby prevented, which cancels the need for full cleaning and sterilization between manufacturing runs, in particular for biological/biocompatible samples manufacturing.

To avoid contamination once samples are complete, one only has to remove the sample in its holder or recipient together with the contamination prevention device still fitted about said holder at its bottom end. The top end seal can be removed from the nozzle or needle one-handedly by an operator, which at the same time may hold the skirt extended to prevent falling on the manufactured sample in the holder if the skirt's wall is not rigid enough to hold onto itself.

In an embodiment of the contamination prevention device, the tubular wall is a continuous wall, i.e. defining a plain envelope or surface between said first and second ends. The tubular wall may in use advantageously show a substantially conical or frusto-conical shape preferably.

Preferably, the wall is made of a substantially hermetic material. In the context of the present invention, the terms "substantially hermetic material" should be interpreted as a material that can preserve hermetic seal between the inside and outside of the contamination prevention device despite the ambient temperature. Advantageously, said hermetic material may comprise a plastic-based material, in particular from polyolefins, a rubber-based material or a silicon-based material or a combination thereof. Coated woven or non-woven materials, as well as coated paper-based material may in some cases be contemplated as well if transparency is not required.

In an embodiment, each of said first and second ends comprises an elastic ring seal such as an O-ring seal.

In embodiments, the skirt wall may be pre-shaped. In particular, the wall may have an accordion-like shape. The pre-shaping of the skirt wall may be advantageous to confer sufficient rigidity to the contamination prevention device of the invention in order for it not to collapse under its own weight on a sample when the skirt's top end is removed from a deposition head of an additive manufacturing system.

According to a second object, in accordance with claim 8, the invention further relates to an additive manufacturing method, wherein a contamination prevention device as previously described is used to prevent contamination between two consecutive additive manufacturing batches.

The method of the invention advantageously comprises a step of hermetically fitting the seal at a first of said ends about a material depositing head of an additive manufacturing system and a step of hermetically fitting the seal at a second of said ends about a sample holder.

In an embodiment of the inventive method the step of hermetically fitting the seal at a first of said ends about a material depositing head of an additive manufacturing system comprises elastically fitting the seal about said head.

The step of hermetically fitting the seal at a second of said ends about a sample holder may further in an embodiment comprise elastically adjusting said seal about a holder's wall before manufacturing of a sample into said holder.

The method of the invention further comprises removing the seal from said additive material deposition member of said head after a sample has been manufactured into said holder.

The invention, in accordance with claim 12, finally relates to an additive manufacturing assembly, comprising a contamination prevention device as previously described. In preferred embodiments, said assembly comprises a biological material reservoir, preferably a syringe, and a sample holder, the seal at a first of the ends of the contamination prevention device being adjusted to the biological material reservoir and the seal at a second of said ends being adjusted to a sample holder. Such assembly can be manufactured and conditioned in a sterile packaging for ease of transport and security of implementation in an additive manufacturing process.

### Presentation of drawings

Further details of the invention will be better understood in view of the following description of preferred embodiments thereof and the appended drawings, wherein:
- Figures 1A and 1B show an example of a contamination prevention device according to an embodiment in side and top view respectively;
- Figures 2A and 2B show the steps for installing the contamination prevention device of Figures 1A and 1B about a printing head and sample holder in an additive manufacturing system before initiating a manufacturing batch in the sample holder;
- Figure 3A shows the contamination prevention device of Figures 1 and 2 after installation and before starting a manufacturing batch;
- Figure 3B shows a second embodiment of a contamination prevention device according to the invention, arranged for forming a closed sachet around a sample holder after installation and before starting a manufacturing batch;
- Figure 4 shows the contamination prevention device's behaviour during a manufacturing batch;
- Figures 5 and 6 represent steps for removing the contamination prevention device of the invention from the additive manufacturing system after manufacturing is complete.

### Description of preferred embodiments

The present invention proposes a contamination prevention device specifically configured for use in additive manufacturing techniques. The inventive contamination prevention device aims at preventing environmental contamination within the additive manufacturing systems during manufacturing batches to reduce the need of cleaning the systems in between batches.

The inventive contamination prevention device finds preferred application in the prevention of cross-contamination between samples during additive manufacturing of biological and biocompatible samples and implants, such as in the bio-printing of bodily tissues such as skin or cartilaginous implants. Cross-contamination is indeed critical to prevent in such bio-printing processes in order to ensure viability of the samples for medical purposes, in particular implantation in patients, and most importantly to avoid biological material coming from a previous patient contaminating the sample undergoing bio-printing (thus avoiding e.g. implant rejection).

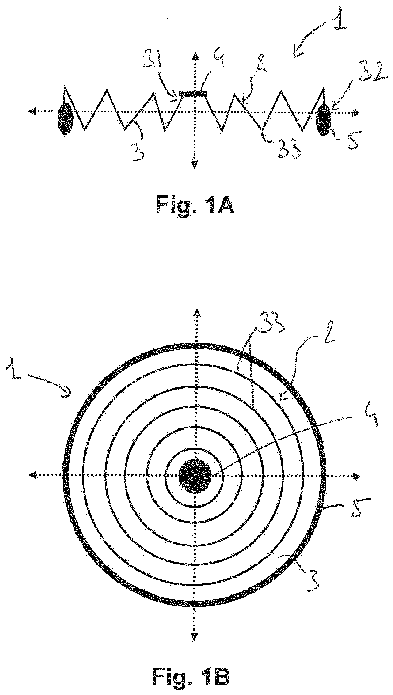

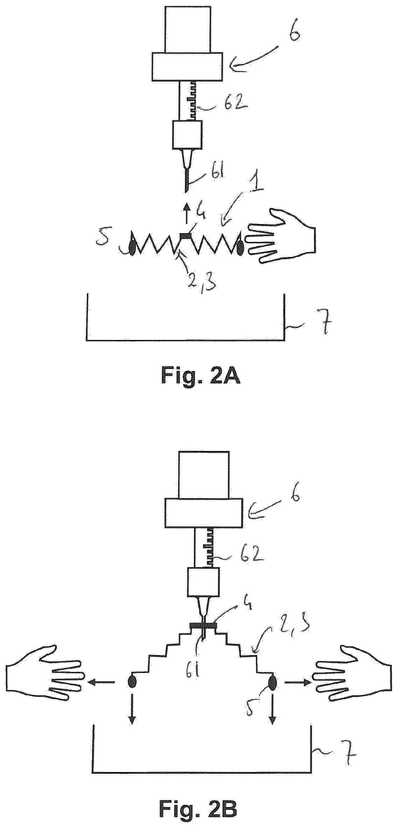

Figures 1A and 1B represent a non-limitative example of a contamination prevention device 1 according to the invention. Figures 2 to 6 further represent implementation steps of a method using the device 1 in an additive manufacturing system to prevent contamination.

The contamination prevention device 1 essentially comprises a skirt 2 made of foldable and/or flexible material, so as to form a substantially tubular wall 3 having a first end 31 and a second end 32, said wall 3 being continuous and configured to be extensible in at least two orthogonal dimensions of space, represented in doted arrows in Figures 1A and 1B.

The material forming wall 3 of the skirt 2 of the device is preferably a substantially hermetic material, such as an air and liquid tight material under atmospheric pressure at 25°C. Preferable materials for the skirt's wall 3 comprise plastic-, rubber- or silicon-based materials for example.

The skirt 2 further comprises, at each of said wall's ends 31, 32 a seal 4, 5. In some embodiments said seals 4, 5 may comprise an elastic, ring-shapes seal, such as an O-ring seal. Such ring-shaped seal 4, 5 can either be integrated directly into the wall 3 and formed of a same material or attached to the wall's ends 31, 32 by any compatible method such as bonding, heat sealing or welding.

When two ring-shaped seals 4, 5 are provided at both ends 31, 32 of the wall the skirt 2 thus has two opposite open ends 31, 32 with the wall 3 extending between said ends 31, 32 and forming a tube or collar.

In a variant represented in figures 1A, 1B one of the seals may be a plain self resealable gasket 4 while the second seal remains a ring-shaped seal 5, preferably an O-ring seal. In such embodiment, the skirt 2 thus has a first closed end 31 from which extends the wall towards a second open end 32 with the wall 3 extending between said ends 31, 32 and forming a substantially conical or frusto-conical envelope. The provision of a plain gasket at an end 31 of wall 3 of the skirt 2 of the contamination device 1 of the invention may be preferable in some applications, in particular for additive manufacturing of biological and biocompatible samples as described in more details in relation to figures 2 to 6.

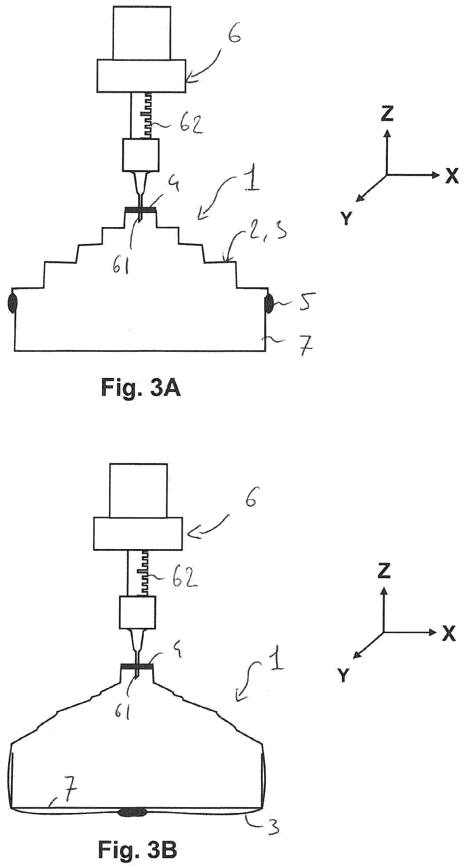

In addition, the opening at a largest end 32 of the skirt 2 may be configured such that it is reclosable, to allow for fully closing the wall 3 about a recipient for example, in a sachet like fashion as shown in figure 3B. To allow for such reclosability the second end 32 may then not be fitted with a ring shape seal, but with an adhesive or magnetic seal, comprising repositionable adhesive or magnetic bands, or plastic zip locking members.

In the preferred example represented in figures 1A and 1B the wall 3 of the skirt 2 is a pre-shaped wall, and more specifically an accordion like pre-shape. This pre-shaping of the wall 3 proves particularly advantageous as it makes the contamination prevention device 1 of the invention very compact, with a substantially regular disc shape before use, which allows for instance stacking of multiple device in a same packaging for disposable, single use purposes. At the same time, the pre-shaping allows for flexibility and extensibility of the wall 3 of the skirt 2 even if the wall's material has some rigidity, which is required to prevent the device 1 from collapsing upon its own weight as will be described later. Rigidity can be achieved by thickening the wall 3 from a few tenth of millimetre to about 1 millimetre for example, depending on the material.

The pre-shaping of the wall 3 to provide compressibility and flexibility thereof in multiple directions of space can result from the provision of parallel folding lines 33, which may be regularly distributed between the ends 31, 32 of the wall 3 such that said wall 3 can fold, respectively unfold, like an accordion in at least two orthogonal directions represented by the dotted arrows in figure 1A, 1B when a compressive, respectively traction, load is applied at any of said ends 31, 32.

The contamination prevention device 1 can be used as represented in figures 2 to 6, depicting schematically consecutive steps of an additive manufacturing method according to the invention, wherein said contamination prevention device 1 is used to prevent cross-contamination between two consecutive additive manufacturing batches or runs.

The contamination prevention device 1 is designed for creating a confined working space in an additive manufacturing system, and more specifically a confined working space between a manufacturing head, defined as printing head 6 in the following, on the one hand, and a sample holder 7 or recipient, wherein a printed sample S is to be grown additively by the printing head 6, on the other hand.

In any additive manufacturing system, the printing head 6 is usually movable along two or three orthogonal directions X, Y, Z with respect to a platform onto which a sample holder 7 or recipient can be fixedly positioned. In some cases, in particular when the printing head 6 is movable along only two directions, then the platform may be movable itself along one third direction at least, perpendicularly to the two ones of the printing head 6. The displacements of the printing head 6 and/or platform of an additive manufacturing system are necessary to grow a sample in the three dimensions X, Y, Z in the sample holder 7 according to a digital model of the sample S. The displacements of the printing head 6 and/or platform are computer controlled based on the digital model of the sample S.

The printing head 6 is mostly, in simplified terms, an extruder comprising a printing outlet, formed of a nozzle or needle 61 depending on application, and an inlet formed of or connected to a printing material reservoir, cartridge or syringe 62, the printing material being fed under pressure and at controlled temperature to the nozzle or needle 61 for extrusion and deposition in the sample holder 7. Contamination of the additive manufacturing environment however arises due to formation of aerosol droplets at the needle's tip, which droplets are projected in an uncontrolled manner throughout the system.

The contamination prevention device 1 advantageously helps confining the printing head 6 and sample holder 7 in an additive manufacturing system to prevent contamination due to aerosols droplets projections during manufacturing batches.

In a first step (Figures 2A, 2B) before manufacturing of a sample is launched, the ends 31, 32 of the skirt's wall 3 are hermitically fitted by means of the seals 4, 5 about the printing head 6, preferably about the needle 61, on the one hand, and the sample holder 7, on the other hand. To that end an operator manually punctures or snap fits the seal 4 at a first end 31 onto the needle 61 and then extends the end 32 and its seal 5 to adjust it about the walls of the sample holder 7.

It must be noted here that the seal 4 at the first end of the skirt's wall 3 may be pre-punctured to ease adjustment to the needle 61 or a blunt nozzle (not shown in the figures) where such is used for depositing the printed material. Likewise the sample holder's walls may be treated or conformed to improve hermetic adjustment of the seal 5 about said walls, such as with the provision of ridges or notches for seal retention, including where appropriate mating shapes thereof.

Thereby, as shown in Figure 3A, the skirt 2 of the device 1 of the invention firmly and hermitically holds onto the needle 61 and the sample holder 7, preventing leakage of printing material along the needle 61 or sample holder's walls. In addition, the skirt 2 extending between said ends 31, 32 and its wall 3 forms a tubular envelope there between, which protects and prevents from projections, in particular of aerosol droplets forming at the printing head 6 to be projected in the environment of the manufacturing system.

When the contamination prevention device 1 comprises a reclosable seal 5 at its second end 32, the skirt 2 is wrapped (Figure 3B) around the sample holder 7 until the reclosable seal 5 can be closed, under the bottom of the holder 7. In such case, the wall 3 is stretched from the needle 61 to the bottom of the holder 7.

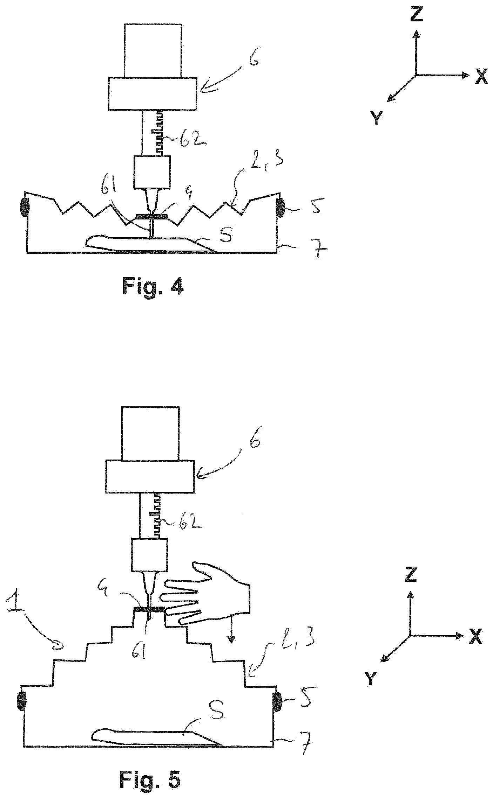

Once the seals 4, 5 fitted to the printing head 6 and sample holder 7 the manufacturing of a sample S can start, as shown in figure 4. The printing head 6 is lowered in the sample holder 7 such that the needle 61 can start depositing a printing material to grow a sample S in the sample holder 7. During the manufacturing the wall 3 of the skirt 2 follows the movements of the printing head 6 without interfering with its properties, such as printing precision and movement speed and accuracy. The pre-shaping of the wall 3 advantageously provides elasticity and prevents the wall from collapsing into the sample holder and to touch the sample S being formed therein.

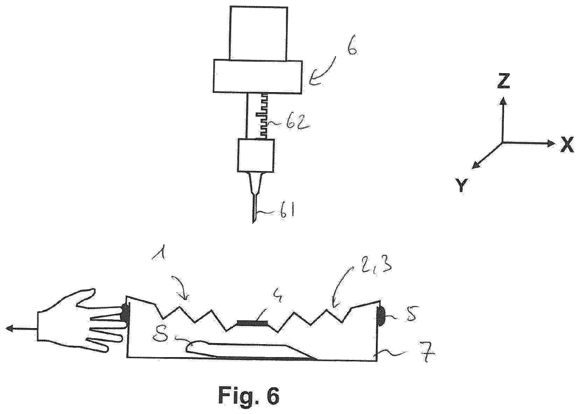

Once the sample S manufacturing is complete (figure 5), an operator simply needs removing the seal 4 about the printing head's needle 61 and then to withdraw the contamination prevention device 1 still attached at the second end 32 of the wall 3 of the skirt on the holder 7 from the manufacturing system (figure 6), thereby protecting the sample S in the sample holder 7, while preventing that any projected material settled onto the inner surface of the skirt falls into the manufacturing system, which would cause contamination. Again, as visible in figure 6, the pre-shaping of the wall 3 ensures that the skirt doesn't collapse onto the just manufactured sample S.

The operator can then remove the contamination prevention device 1 from the sample holder 7 outside the manufacturing system and discard it for destruction or recycling.

In some applications where sterility of the whole printing environment must be ensured the contamination prevention device 1 of the invention may advantageously be integrated in sterile conditions in a unitary printing unit comprising the contamination prevention device 1 mounted and sealed to the sample holder 7 and a syringe 62 or printing material reservoir. Such unitary printing unit can be assembled in aseptic conditions off the additive manufacturing system where printing must be carried out and conditioned in a sterile package, which can be brought, opened and mounted by an operator to the additive manufacturing system by connecting the syringe 62 or reservoir to a pressure source of the manufacturing system. Preferably, the connection to the pressure source will comprises inserting a sterilising filter between the filled syringe 62 and the pressure source. The sample can then be manufactured in a fully sterile environment. At the end of manufacturing the sample in the unitary assembly can be removed integrally from the manufacturing system by disconnecting the syringe 62 from the pressure source of the system and resealing said syringe for transporting the unitary assembly back into an environment more suitable for biological manipulation.

The provision of such unitary assembly, which can be produced and packaged in aseptic conditions, similar to surgical instruments manufacturing, and opened and integrated in an additive manufacturing system only for the sample printing phase, provides an ability to conduct the biological and mechanical parts of manufacture in separately optimised environments. It further provides significant logistic and cost benefits to implementation, with very limited risk of cross contamination issuing from operator's manipulation actions.

The present invention therefore provides a simple, yet effective accessory for preventing contamination during additive manufacturing batches, which is or particular importance for securing manufacturing of biological and/or biocompatible samples in particular to avoid any cross-contamination risk between two samples consecutively manufactured in a same manufacturing system.

## Claims

1. Contamination prevention device (1), comprising a skirt (2) defining a tubular flexible wall (3) having a first end (31) and a second end (32), said wall (3) being continuous and configured to be extensible in at least two orthogonal dimensions of space, each of said ends at least delimiting an elastic opening and each of said ends being fitted with an elastic ring seal (4, 5).

2. Contamination prevention device (1) according to claim 1, wherein the wall (3) is a continuous wall.

3. Contamination prevention device (1) according to claim 1 or 2, wherein the wall (3) is made of a substantially hermetic material.

4. Contamination prevention device (1) according to any of the preceding claims, wherein the wall (3) is made of a plastic-, a rubber- or a silicon-based material.

5. Contamination prevention device (1) according to any of the preceding claims, wherein the wall (3) is pre-shaped.

6. Contamination prevention device (1) according to any of the preceding claims, wherein the wall (3) has an accordion-like shape.

7. Contamination prevention device (1) according to any of claims 1 to 6, wherein each of said seals (4, 5) is an O-ring seal.

8. Additive manufacturing method, wherein a contamination prevention device (1) according to any of claims 1 to 7 is used to prevent cross-contamination of manufactured samples (S) between two consecutive additive manufacturing batches, said method comprising a step of hermetically fitting the seal (4) at a first (31) of said ends about a material depositing head (6) of an additive manufacturing system and a step of hermetically fitting the seal (5) at a second (32) of said ends about a sample holder (7).

9. A method according to claim 8, wherein the step of hermetically fitting the seal (4) at a first (31) of said ends about a material depositing head (6) of an additive manufacturing system comprises elastically fitting the seal (4) about said head (6).

10. A method according to any of claims 8 or 9, wherein the step of hermetically fitting the seal (5) at a second (32) of said ends about a sample holder (7) comprises elastically adjusting said seal (5) about a holder's wall before manufacturing of a sample (S) into said holder.

11. A method according to any of claims 8 to 10, further comprising removing the seal (4) from said additive material deposition member (61) of said head (6) after a sample (S) has been manufactured into said holder (7).

12. Additive manufacturing assembly, comprising a contamination prevention device (1) according to any of claims 1 to 7.

13. Additive manufacturing assembly according to claim 12, wherein the seal (4) at a first (31) of the ends of the contamination prevention device (1) is adjusted to a biological material reservoir (62), preferably a syringe, and the seal (5) at a second (32) of said ends is adjusted to a sample holder (7).

14. Additive manufacturing assembly according to claim 12 or 13, further conditioned in a sterile packaging.

## Patentansprüche

1. Vorrichtung zur Kontaminationsverhinderung (1), umfassend eine Schürze (2), die eine röhrenförmige flexible Wand (3) mit einem ersten Ende (31) und einem zweiten Ende (32) definiert, wobei die Wand (3) durchgehend ist und dazu konfiguriert ist, in mindestens zwei orthogonale Raumdimensionen dehnbar zu sein, wobei jedes der Enden mindestens eine elastische Öffnung begrenzt und an jedem der Enden ein elastischer Dichtungsring (4, 5) angebracht ist.

2. Vorrichtung zur Kontaminationsverhinderung (1) nach Anspruch 1, wobei die Wand (3) eine durchgehende Wand ist.

3. Vorrichtung zur Kontaminationsverhinderung (1) nach Anspruch 1 oder 2, wobei die Wand (3) aus einem im Wesentlichen hermetischen Material hergestellt ist.

4. Vorrichtung zur Kontaminationsverhinderung (1) nach einem der vorhergehenden Ansprüche, wobei die Wand (3) aus einem Kunststoff-, einem Gummi- oder einem Silikon-basierten Material hergestellt ist.

5. Vorrichtung zur Kontaminationsverhinderung (1) nach einem der vorhergehenden Ansprüche, wobei die Wand (3) vorgeformt ist.

6. Vorrichtung zur Kontaminationsverhinderung (1) nach einem der vorhergehenden Ansprüche, wobei die Wand (3) eine Akkordeon-artige Form aufweist.

7. Vorrichtung zur Kontaminationsverhinderung (1) nach einem der Ansprüche 1 bis 6, wobei jede der Dichtungen (4, 5) ein O-Dichtungsring ist.

8. Additives Herstellungsverfahren, wobei eine Vorrichtung zur Kontaminationsverhinderung (1) nach einem der Ansprüche 1 bis 7 verwendet wird, um eine Kreuzkontamination von hergestellten Proben (S) zwischen zwei aufeinanderfolgenden additiven Herstellungschargen zu verhindern, wobei das Verfahren einen Schritt eines hermetischen Anbringens der Dichtung (4) an einem ersten (31) der Enden um einen Materialablagekopf (6) eines additiven Herstellungssystems und einen Schritt eines hermetischen Anbringens der Dichtung (5) an einem zweiten (32) der Enden um einen Probenhalter (7) umfasst.

9. Verfahren nach Anspruch 8, wobei der Schritt des hermetischen Anbringens der Dichtung (4) an einem ersten (31) der Enden um einen Materialablagekopf (6) eines additiven Herstellungssystems ein elastisches Anbringen der Dichtung (4) um den Kopf umfasst.

10. Verfahren nach einem der Ansprüche 8 oder 9, wobei der Schritt des hermetischen Anbringens der Dichtung (5) an einem zweiten (32) der Enden um einen Probenhalter (7) ein elastisches Einstellen der Dichtung (5) um eine Halterwand vor einer Herstellung einer Probe (S) in dem Halter umfasst.

11. Verfahren nach einem der Ansprüche 8 bis 10, ferner umfassend ein Entfernen der Dichtung (4) von dem additiven Materialablageelement (61) des Kopfes (6), nachdem eine Probe (S) in dem Halter (7) hergestellt worden ist.

12. Additive Herstellungsanordnung, umfassend eine Vorrichtung zur Kontaminationsverhinderung (1) nach einem der Ansprüche 1 bis 7.

13. Additive Herstellungsanordnung nach Anspruch 12, wobei die Dichtung (4) an einem ersten (31) der Enden der Vorrichtung zur Kontaminationsverhinderung (1) auf ein biologisches Materialreservoir (62), vorzugsweise eine Spritze, eingestellt ist, und die Dichtung (5) an einem zweiten (32) der Enden auf einen Probenhalter (7) eingestellt ist.

14. Additive Herstellungsanordnung nach Anspruch 12 oder 13, die ferner in einer sterilen Verpackung konditioniert ist.

## Revendications

1. Dispositif de prévention de contamination (1), comprenant une jupe (2) définissant une paroi tubulaire flexible (3) présentant une première extrémité (31) et une seconde extrémité (32), ladite paroi (3) étant continue et configurée pour être extensible dans au moins deux dimensions orthogonales de l'espace, chacune desdites extrémités délimitant au moins une ouverture élastique et chacune desdites extrémités étant munie d'un joint annulaire élastique (4, 5).

2. Dispositif de prévention de contamination (1) selon la revendication 1, dans lequel la paroi (3) est une paroi continue.

3. Dispositif de prévention de contamination (1) selon la revendication 1 ou 2, dans lequel la paroi (3) est faite d'un matériau sensiblement hermétique.

4. Dispositif de prévention de contamination (1) selon l'une quelconque des revendications précédentes, dans lequel la paroi (3) est faite d'un matériau à base de plastique, de caoutchouc ou de silicium.

5. Dispositif de prévention de contamination (1) selon l'une quelconque des revendications précédentes, dans lequel la paroi (3) est préformée.

6. Dispositif de prévention de contamination (1) selon l'une quelconque des revendications précédentes, dans lequel la paroi (3) présente une forme en accordéon.

7. Dispositif de prévention de contamination (1) selon l'une quelconque des revendications 1 à 6, dans lequel chacun desdits j oints (4, 5) est un joint torique.

8. Procédé de fabrication additive, dans lequel un dispositif de prévention de contamination (1) selon l'une quelconque des revendications 1 à 7 est utilisé pour empêcher une contamination croisée d'échantillons (S) fabriqués entre deux lots consécutifs de fabrication additive, ledit procédé comprenant une étape de montage du joint (4) de manière hermétique au niveau d'une première (31) desdites extrémités autour d'une tête de dépôt de matériau (6) d'un système de fabrication additive et une étape de montage du joint (5) de manière hermétique au niveau d'une seconde (32) desdites extrémités autour d'un support d'échantillon (7).

9. Procédé selon la revendication 8, dans lequel l'étape de montage du joint (4) de manière hermétique au niveau d'une première (31) desdites extrémités autour d'une tête de dépôt de matériau (6) d'un système de fabrication additive comprend le montage du joint (4) de manière élastique autour de ladite tête (6).

10. Procédé selon l'une quelconque des revendications 8 ou 9, dans lequel l'étape de montage du joint (5) de manière hermétique au niveau d'une seconde (32) desdites extrémités autour d'un support d'échantillon (7) comprend l'ajustement dudit joint (5) de manière élastique autour d'une paroi du support avant la fabrication d'un échantillon (S) dans ledit support.

11. Procédé selon l'une quelconque des revendications 8 à 10, comprenant en outre le retrait du joint (4) dudit élément de dépôt de matériau additif (61) de ladite tête (6) après qu'un échantillon (S) a été fabriqué dans ledit support (7).

12. Ensemble de fabrication additive, comprenant un dispositif de prévention de contamination (1) selon l'une quelconque des revendications 1 à 7.

13. Ensemble de fabrication additive selon la revendication 12, dans lequel le joint (4) au niveau d'une première (31) des extrémités du dispositif de prévention de contamination (1) est monté sur un réservoir de matière biologique (62), de préférence une seringue, et le joint (5) au niveau d'une seconde (32) desdites extrémités est monté sur un support d'échantillon (7).

14. Ensemble de fabrication additive selon la revendication 12 ou 13, conditionné en outre dans un emballage stérile.
